# EUROPÄISCHE PATENTANMELDUNG

(11) **EP 0 612 974 A2**
(43) Veröffentlichungstag der Anmeldung: **31.08.1994**
(21) Anmeldenummer: 94102077.8
(22) Anmeldetag: 10.02.1994
(51) Int. Cl.: G01B 7/30, G01D 5/14

(54) **Magnetischer Winkellagegeber**

(30) Priorität: 25.02.1993 DE 9302758 U
(71) Anmelder: SIEMENS AKTIENGESELLSCHAFT, D-80333 München (DE)
(72) Erfinder: Cuylen, Michael, D-90513 Zirndorf (DE); Stecher, Werner, Dipl.-Ing. (FH), D-91183 Abenberg (DE)

(57) **Zusammenfassung**

An einer Drehwelle (DW) ist ein zylinderförmiger Magnet (M) mit diametraler Magnetisierung (N/S) axial angebracht. Mindestens ein magnetisches Sensorelement (S1,S2,...) ist in räumlicher Nähe der Mantelfläche des Magneten (M) feststehend positioniert. Ein Ring (R) aus magnetisch leitendem Material umfaßt den Magneten (M) unter Bildung eines möglichst gleichmäßigen Luftspaltes (L), in dem das Sensorelement (S1,S2...) feststehend positioniert ist. Dieses gibt ein sinusförmiges Meßsignal (MS1,MS2,...) ab, welches als ein Maß für aktuelle Winkellage der Drehwelle (DW) dient. Der Ring kann feststehend oder mit der Drehwelle (DW) drehbar angebracht sein. Der Ring bewirkt insbesondere eine Amplitudenverstärkung des Meßsignales (MS1,...) vom Sensorelement (S1...).

## Beschreibung

Die Erfindung betrifft eine Vorrichtung zur Bildung von mindestens einem sinusförmigen Meßsignal, welches ein Maß für die aktuelle Winkellage einer Drehwelle ist.

Aus der DE 41 13 880 Al ist ein Drehmeldesystem bekannt. Dieses enthält einen drehpositionierbaren Permanentmagneten mit einer senkrecht zu dessen Drehachse verlaufenden Magnetachse. Der im Querschnitt kreisförmige Permanentmagnet weist bezüglich der Drehachse diametral einander gegenüberliegende Magnetpole auf. Zur Erzeugung von sich jeweils sinusförmig in Abhängigkeit von der Drehposition des Permanentmagneten ändernden Meßsignalen sind Hallelemente auf einem einstückigen, keilförmigen Sensorträger fest montiert. Der Permanentmagnet ist zur Einjustierung der 90 Grad Phasenverschiebung der Meßsignale in Richtung der Drehachse bezüglich der Hallelemente höhenverstellbar angeordnet.

Demgegenüber liegt der Erfindung die Aufgabe zugrunde, einen kompakt und raumsparend aufgebauten Winkellagegeber anzugeben, welcher ohne vorherige Justierung möglichst hochgenaue sinusförmige Meßsignale mit hoher Meßsignalamplitude erzeugt.

Die Aufgabe wird gelöst mit der im Anspruch 1 enthaltenen Vorrichtung. Vorteilhafte weitere Ausführungsformen derselben sind in den Unteransprüchen angegeben.

Die erfindungsgemäße Vorrichtung weist einen zylinderförmigen Magneten mit diametraler Magnetisierung auf, welcher achsial an einem Ende einer Drehwelle angebracht ist. Mindestens ein magnetisches Sensorelement, insbesondere ein Hallelement, ist in räumlicher Nähe der Mantelfläche des zylinderförmigen Magneten feststehend positioniert. Es gibt ein von der aktuellen Winkellage der Drehwelle abhängiges, sinusförmiges Meßsignal ab. Ein Ring aus magnetisch leitendem Material umfaßt den zylinderförmigen Magneten unter Bildung eines möglichst gleichmäßig ringförmigen Luftspaltes. In dem Luftspalt ist das mindestens eine magnetische Sensorelement feststehend positioniert.

Bei einer Ausführungsform der Erfindung ist der Ring feststehend positioniert. Bei einer anderen Ausführungsform führt der Ring die gleiche Drehbewegung wie der zylinderförmige Magnet aus. Es ist vorteilhaft, wenn der Ring hierzu insbesondere mit der Drehwelle mechanisch verbunden ist.

Die erfindungsgemäße Einfassung der Anordnung aus dem zylinderförmigen Magneten und dem mindestens einen, in räumlicher Nähe zu dessen Mantelfläche angeordneten magnetischen Sensorelement durch den Ring aus magnetisch leitendem Material hat eine vielzahl von Vorteilen. So bewirkt der Ring eine derartige Homogenisierung der Magnetfelder um den zylinderförmigen Magneten, daß das vom magnetischen Sensorelement erzeugte Meßsignale nahezu ideale sinusförmig ist. Ferner ruft der Ring eine Verstärkung des erfaßbaren Meßsignales hervor, so daß der Signal-Rauschabstand vergrößert wird. Schließich wirkt der Ring auch abschirmend gegenüber äußeren magnetischen Störfeldern. Aufgrund dieser Eigenschaften ist der erfindungsgemäße Winkellagegeber besonders geeignet zur Winkellageerfassung bei Stillstand der den zylinderförmigen Magneten tragenden Drehachse, d.h. bei einer sogenannten Stillstandsmessung.

Die Erfindung wird an Hand eines, in den nachfolgend kurz angeführten Figuren dargestellten Ausführungsbeispieles weiter erläutert. Dabei zeigt:
- FIG 1: eine Schnittdarstellung durch die erfindungsgemäße Vorrichtung, und
- FIG 2: ein Blockschaltbild für eine bevorzugte Ausführungsform einer Auswerteschaltung für die erfindungsgemäße Vorrichtung.

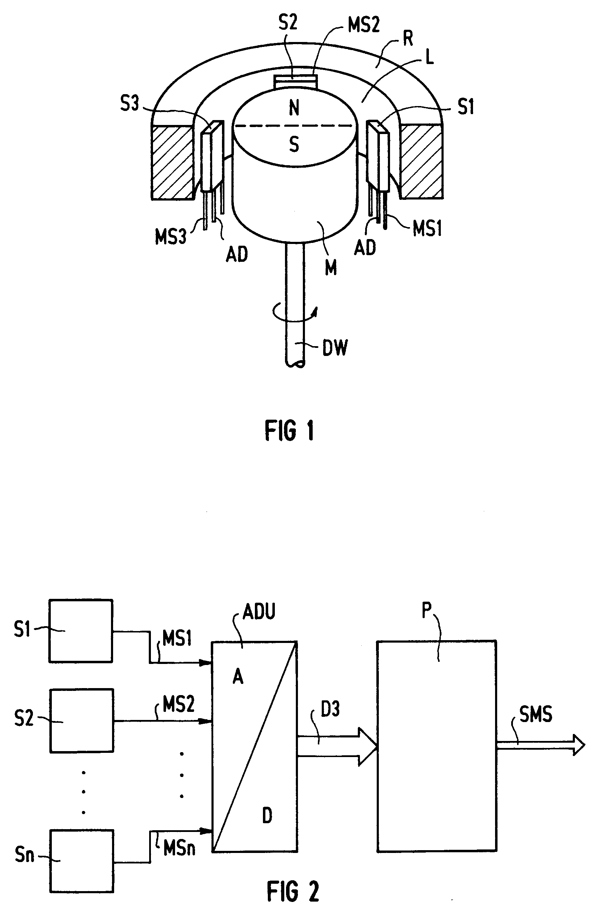

FIG 1 zeigt beispielhaft eine Drehwelle DW, deren aktuelle Winkellage besonders bei Stillstand erfaßt werden soll.

Die hierzu dienende erfindungsgemäße Vorrichtung weist einen einstückigen, zylinderförmigen Magneten mit diametraler Magnetisierung auf, welcher axial an einem Ende der Drehwelle DW angebracht ist. In der Darstellung von FIG 1 sind die halbzylinderförmigen Magnetisierungsbereiche durch eine strichlierte Linie markiert und mit N bzw. S gekennzeichnet. Zur Winkellageserfassung der Baueinheit aus Drehwelle DW und Magnet M ist mindestens ein magnetisches Sensorelement S1 in räumlicher Nähe der Mantelfläche des zylinderförmigen Magneten M feststehend positioniert. An dessen Anschlußdrähten AD kann ein Meßsignal MS1 abgegriffen werden, welches nahzu ideal sinusförmig ist. Hieraus kann bevorzugt unter zu Hilfenahme einer nachgeschalteten Auswerteschaltung die aktuelle Winkellage von Drehwelle DW und Magnet M z.B. in digitalisierter Form abgeleitet werden kann.

Als magnetisches Sensorelement eignet sich besonders ein sogenanntes "HALL-Element", welches nach Anschluß an eine Versorgungsspannung die sinusförmige Meßsignalspannung MS1 bei Drehung des Magneten M ohne Zuführung von weiterer Erregerenergie direkt zur Verfügung stellt. Als magnetische Sensorelemente können bei der erfindungsgemäßen Vorrichtung auch andere bekannte Formen von Magnetfeldsensoren eingesetzt werden, z.B. sogenannte "Feldplatten".

Vorteilhaft sind zwei oder mehr magnetische Sensorelemente bevorzugt jeweils um 90° Winkel zueinander versetzt um die Mantelfläche des zylinderförmigen Magneten M positioniert. FIG 1 zeigt bevorzugt drei derart angeordnete Sensorelemente S1, S2 und S3, an deren Anschlußdrähten AD sinusförmige und zueinander um 90° phasenversetzte Meßsignale MS1, MS2, MS3 abgegriffen werden können.

Die Sensoren S1, S2 bilden dabei beispielhaft ein System aus einem sinusförmigen und einem cosinusförmigen Meßsignal MS1,MS2. Dieses eignet sich besonders gut zur eindeutigen und drehrichtungsunabhängigen Erfassung der Winkellage von Drehwelle DW und Magneten M, insbesondere bei deren Stillstand. Sind bei einer anderen, in FIG 1 bereits darstellten Ausführungsform drei magnetische Sensorelemente S1, S2, S3 jeweils um 120° zueinander versetzt um die Mantelfläche des Magneten M angeordnet, so stellen diese einen sogenannten "Drehstromgeber" dar. Mit sechs Sensorelementen S1...S6, jeweils um 60° versetzt angeordnet, kann z. B. ein "Rotorlagegeber", der bei der Ansteuerung von Drehstrommotoren eingesetzt wird, realisiert werden. Über die dargestellten Ausführungsformen hinausgehend sind noch weitere Anordnungen der magnetischen Sensorelemente möglich.

Erfindungsgemäß umfaßt ein Ring R aus magnetisch leitendem Material den zylinderförmigen Magneten M unter Bildung eines Luftspaltes L. Der Luftspalt sollte möglichst gleichmäßig ringförmig sein, was durch eine geeignete Justage von Magnet M und Ring R erreichbar ist. Im Luftspalt L sind die magnetischen Sensorelemente S1, S2, S3,... feststehend positioniert. Der Ring R besteht bevorzugt aus ferromagnetischem, insbesondere weichmagnetischem Material, z.B. aus Stahl.

Der den rotierenden zylinderförmigen und diametral magnetisierten Magneten M möglichst achsensymmetrisch umfassende Ring R hat zum einen den Vorteil, daß die innen liegende "Meßzone" gegen die Einwirkung von äußeren Fremdmagnetfeldern abgeschirmt wird. Desweiteren tritt der besondere Vorteil auf, daß der Ring R eine Verstärkung der Amplituden der Meßsignale MS1, MS2, MS3, ... bewirkt. Bei geeigneter Dimensionierung der Abmessungen von Magnet M, Luftspalt L und Ring R kann eine Erhöhung der Amplituden der sinusförmigen Meßsignale um 100 % im Vergleich zur Anordnung ohne Ring erreicht werden. Diese Vergrößerung der Meßsignalamplituden erhöht die Genauigkeit bei der Erfassung der aktuellen Winkellage der Drehwelle DW, bzw. vereinfacht deren Verarbeitbarkeit in einer Auswerteschaltung. Ferner bewirkt der Ring eine derartige Homogenisierung des magnetischen Feldes um den Magneten, daß die Meßsignale MS1, MS2 und MS3 nahezu ideale Sinus- bzw. Cosinusform aufweisen.

Bei einer praktischen Realisierung der Anordnung von FIG 1 kann der diametral magnetisierte Magnet M einen Durchmesser von bevorzugt ca. 5 bis 8 mm aufweisen. Beträgt die Ringstärke des Luftspaltes L ca. 2 mm und die Dicke des Ringes R ca. 1 mm, so weist die Anordnung von FIG 1 einen gesamten Außendurchmesser von nur ca. 11 bis 14 mm auf. Als Bauhöhe des Magneten M und des Ringes R kann bevorzugt ein Wert von ca. 8 mm gewählt werden. Die erfindungsgemäße Vorrichtung ist somit mechanisch einfach, robust und kompakt aufgebaut.

Der Ring R aus magnetisch leitendem Material kann in der gleichen Weise wie die magnetischen Sensorelemente feststehend positioniert sein. Diese Ausführung hat den Vorteil, daß der Ring R ohne großen mechanischen Aufwand angebracht werden kann. Es ist lediglich auf eine möglichst axiale Positionierung des Ringes zu achten. Andernfalls würde bei einer leicht exzentrischen Anordnung des Ringes relativ zum Magneten M bzw. der Drehachse DW bei Drehung desselben eine winkelabhängige Modulation der Luftspaltdicke auftreten. Diese würde zu einer Verstärkungsmodulation der sinusförmigen Meßsignale MS1, ... führen und den bei der Bestimmung der Winkellage bzw. Winkelgeschwindigkeit naturgemäß vorhandenen Meßfehler geringfügig vergrößern.

Bei einer anderen Ausführungsform kann der Ring R auch derart beweglich angebracht sein, daß er die gleichen Drehbewegungen wie der zylinderförmige Magnet M und die Drehwelle DW ausführt. In diesem Fall tritt keine Relativbewegung zwischen der Außenmantelfläche des Magneten M und der Innenmantelfläche des Ringes R auf und die Luftspaltdicke ist bei jeder Winkellage konstant. Es können somit keine winkellageabhängigen Verstärkungsmodulation in den Meßsignalen auftreten. Diese Ausführungsform ist mechanisch nur geringfügig aufwendiger, da der Ring R zum Zwecke der Ausführung von Drehbewegungen bevorzugt in der gleichen Weise wie der Magnet M direkt mit der Drehwelle DW verbunden werden kann.

Mögliche Ungleichförmigkeiten in der Dicke des Luftspaltes L aufgrund einer geringfügig exzentrischen gegenseitigen Positionierung von Magnet M und Ring R können in diesem Fall auf einfache Weise durch eine Fehlerkorrektur mittels einer "Tabellentransformation" ausgeglichen werden. Hierbei wird eine volle Umdrehung in möglichst kleine und gleichgroße Winkelsegmente zerlegt. Für jedes Winkelsegment kann ein Verstärkungskorrekturwert in einer Tabelle hinterlegt werden, der Schwankungen der Dicke des Luftspaltes L winkellageabhängig korrigiert. Bevorzugt erfolgt die Verwaltung derartiger Fehlerkorrekturtabellen in speziellen Auswerteschaltungen.

In FIG 2 ist eine mögliche Ausführung einer derartigen Auswerteschaltung als Blockschaltbild dargestellt. Die sinusförmigen Meßsignale MS1, MS2, ...MSn von einem jeden, im Luftspalt angeordneten magnetischen Sensorelement S1, S2...Sn werden dabei einen gemeinsamen Analog-Digital-Umsetzer ADU zugeführt. Die hierdurch entstandenen Binärsignale werden Über einen Datenbus DB einem Prozessor P zugeführt, welcher die Meßsignale auswertet, die aktuelle Winkellage- bzw. Winkelgeschwindigkeit in Form von digitalen Werten berechnet und in Form eines Summenmeßsignales SMS zum Zwecke der Anzeige und Weiterverarbeitung ausgibt.

## Patentansprüche

1. Vorrichtung zur Bildung von mindestens einem sinusförmigen Meßsignal (MS1,MS2...MSn), welches ein Maß für die aktuelle Winkellage einer Drehwelle (DW) ist, mit
a) einem zylinderförmigen Magneten (M) mit diametraler Magnetisierung (N/S), welcher achsial an einem Ende der Drehwelle (DW) angebracht ist,
b) mindestens einem magnetischen Sensorelement (S1,S2...Sn), welches in räumlicher Nähe der Mantelfläche des zylinderförmigen Magneten (M) feststehend positioniert ist und das von der aktuellen Winkellage der Drehwelle (DW) abhängige, sinusförmige Meßsignal (MS1,MS2...MSn) abgibt (AD), und
c) einem Ring (R) aus magnetisch leitendem Material, der den Zylinderförmigen Magneten (M) unter Bildung eines Luftspaltes (L) umfaßt, welcher möglichst gleichmäßig ringförmig ist und in dem das mindestens eine magnetische Sensorelement (S1,S2...) feststehend positioniert ist.

2. Vorrichtung nach Anspruch 1, wobei der Ring (R) feststehend positioniert ist.

3. Vorrichtung nach Anspruch 1, wobei der Ring (R) die gleiche Drehbewegung wie der zylinderförmige Magnet (M) ausführt, und zu diesem Zwecke insbesondere mit der Drehwelle (DW) mechanisch verbunden ist.

4. Vorrichtung nach einem der vorangegangenen Ansprüche, mit zwei bzw. drei bzw. sechs magnetischen Sensorelementen (S1,S2,S3), welche um die Mantelfläche des zylinderförmigen Magneten (M) jeweils um 90° bzw. 120° bzw. 60°Grad zueinander versetzt positioniert sind.
